(19) Europäisches Patentamt
European Patent Office
Office européen des brevets

(11) EP 0 449 672 B1

(12) **FASCICULE DE BREVET EUROPEEN**

(45) Date de publication et mention de la délivrance du brevet:
**23.07.1997 Bulletin 1997/30**

(51) Int. Cl.[6]: **C01F 7/02**, B01J 20/08

(21) Numéro de dépôt: **91400331.4**

(22) Date de dépôt: **12.02.1991**

(54) **Agglomérés d'alumine activée et leur procédé d'obtention**

Aktivierte Aluminiumoxydagglomerate und Verfahren zu ihrer Herstellung

Activated alumina agglomerates and process for their preparation

(84) Etats contractants désignés:
**AT BE CH DE DK ES FR GB GR IT LI LU NL SE**

(30) Priorité: **23.02.1990 FR 9002273**

(43) Date de publication de la demande:
**02.10.1991 Bulletin 1991/40**

(73) Titulaire: **RHONE-POULENC CHIMIE**
**92408 Courbevoie Cédex (FR)**

(72) Inventeurs:
- **Chopin, Thierry**
  **F-93200 Saint-Denis (FR)**
- **Jaeger, Philippe**
  **F-30340 Salindres (FR)**
- **Fourre, Patrick**
  **F-75013 Paris (FR)**
- **Taxil, Bernard**
  **F-30100 Alès (FR)**

(74) Mandataire: **Esson, Jean-Pierre et al**
**RHONE-POULENC CHIMIE,**
**Direction de la Propriété Industrielle,**
**25, quai Paul Doumer**
**92408 Courbevoie Cédex (FR)**

(56) Documents cités:
**EP-A- 271 104**
**EP-A- 0 015 801**
**FR-A- 2 341 530**
**US-A- 4 102 978**
**EP-A- 0 015 196**
**EP-A- 0 055 164**
**GB-A- 1 243 735**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Rank Xerox (UK) Business Services
2.14.11/3.4

EP 0 449 672 B1

## Description

La présente invention a pour objet des agglomérés d'alumine activée présentant de bonnes propriétés d'adsorption et des propriétés mécaniques améliorées. L'invention concerne plus particulièrement des billes d'alumine activée. Elle vise également leur procédé d'obtention.

Il est connu d'utiliser l'alumine en tant qu'adsorbant pour éliminer les impuretés présentes dans un fluide qu'il soit liquide ou gazeux. L'alumine est utilisée notamment pour éliminer l'eau contenue dans un courant gazeux.

Généralement, l'épuration s'effectue par passage du fluide au travers d'un lit d'agglomérés d'alumine, de préférence sous forme de billes empilées à l'intérieur de colonnes d'épuration.

Il en résulte que les agglomérés d'alumine destinés à être utilisés comme adsorbants doivent présenter non seulement une bonne capacité d'adsorption, mais également d'excellentes propriétés mécaniques, en particulier, une bonne résistance à l'écrasement.

Le problème qui se posait jusqu'à présent était que, dès que l'on cherchait à accroître les propriétés mécaniques des agglomérés d'alumine, on constatait une baisse de leur propriétés d'adsorption.

Un des objectifs de la présente invention est de fournir des agglomérés d'alumine présentant une bonne capacité d'adsorption et des propriétés mécaniques améliorées.

Un autre objectif de l'invention est de fournir lesdits agglomérés sous forme de billes plus faciles à véhiculer tant pour le chargement que le déchargement des colonnes d'épuration effectués, par exemple, par des systèmes pneumatiques.

Enfin, un autre objectif de l'invention est de proposer un procédé permettant d'obtenir lesdits agglomérés.

La présente invention a précisément pour objet des agglomérés d'alumine satisfaisant aux impératifs précités.

Les agglomérés d'alumine activée de l'invention sont caractérisés par le fait qu'ils présentent une résistance à l'écrasement supérieure à 12 daN, mesurée sur des agglomérés d'alumine activée ayant un diamètre moyen compris entre 3 et 4 mm et une capacité d'adsorption exprimée en pourcentage pondéral d'eau adsorbée, supérieure à 18 %.

On entend par diamètre moyen, un diamètre tel que 50 % en poids des agglomérés ont un diamètre supérieur ou inférieur au diamètre moyen.

Les agglomérés d'alumine activée de l'invention sont, de préférence, sous forme de billes ayant un diamètre moyen variant entre environ 1 mm et environ 10 mm.

Ils présentent une résistance à l'écrasement supérieure à 15 daN, de préférence comprise entre 15 et 25 daN, plus particulièrement entre 15 et 20 daN.

Il y a lieu de noter que les valeurs de résistance à l'écrasement mentionnées ci-dessus sont définies pour des agglomérés d'alumine ayant un diamètre moyen compris entre 3 et 4 mm. Lesdites valeurs sont donc définies en faisant référence au diamètre moyen des agglomérés.

Ainsi, les agglomérés d'alumine activée selon l'invention ayant un diamètre moyen compris entre 6 et 7 mm, présentent une résistance à l'écrasement supérieure à 22 daN, de préférence supérieure à 25 daN et plus particulièrement comprise entre 30 et 50 daN.

L'autre caractéristique des agglomérés d'alumine activée de l'invention est une bonne capacité d'adsorption supérieure à 18 %, de préférence, comprise entre 20 et 24 %.

Par rapport aux billes d'alumine utilisées d'une manière classique comme adsorbants, les agglomérés d'alumine de l'invention ont la caractéristique de posséder une résistance à l'écrasement supérieure pour des propriétés d'adsorption équivalentes.

En effet, on précisera à titre de comparaison que les billes d'alumine actuellement commercialisées par la Société RHONE-POULENC sous la marque SPHERALITE 501.4 ont une bonne capacité d'adsorption de 18 à 24 % mais une résistance à l'écrasement de 10 daN, qu'il serait souhaitable d'augmenter.

Dans un mode particulier de réalisation préférentielle de l'invention, les agglomérés d'alumine activée de l'invention se distinguent également par une morphologie de surface en "bûchettes", c'est-à-dire sous forme de bâtonnets cylindriques. Cette morphologie peut être corrélée avec celle des agglomérés obtenus avant calcination et, plus précisément, suite à la réhydratation de l'alumine activée. On explicitera, ultérieurement, la morphologie desdits agglomérés dénommés par la suite "agglomérés d'alumine intermédiaires".

On donnera également d'autres caractéristiques de structure, texturales et mécaniques, des agglomérés de l'invention.

Le procédé de préparation des agglomérés d'alumine activée de l'invention consiste à effectuer le mûrissement d'agglomérés d'alumine activée sous pression atmosphérique, en présence d'un agent complexant du cation $Al^{3+}$, puis à soumettre lesdits agglomérés à un traitement thermique à une température comprise entre environ 100°C et environ 500°C.

La demanderesse a découvert que la solidité des agglomérés d'alumine activée pouvait être accrue en orientant la réhydratation de l'alumine activée en boehmite, par ajout d'un agent complexant effectué avant l'opération de mûrissement.

Dans un procédé classique de fabrication de billes d'alumine activée, la poudre d'alumine activée est broyée et granulée puis mûrie.

Lors de ces deux étapes, la poudre d'alumine activée se réhydrate en boehmite ($Al_2O_3$, $H_2O$) et en bayerite ($Al_2O_3$, $3H_2O$). A la fin du mûrissement, le taux de réhydratation de l'alumine est au plus égal à 30 % et, généralement, il se forme de 20 à 25 % de bayerite et moins de 5 % de boehmite.

Conformément au procédé de l'invention, l'alumine se réhydrate avec un taux de boehmite d'au moins 5 %, de préférence de 8 à 20 %, la bayerite représentant le complément au plus égal à 30 %.

La demanderesse a trouvé d'une manière inattendue que l'accroissement du taux de boehmite permettait d'améliorer les propriétés mécaniques des agglomérés obtenus sans pour autant affecter leur capacité d'adsorption.

Une première variante de mise en oeuvre du procédé de l'invention consiste à introduire l'agent complexant au cours de l'opération de broyage de la poudre d'alumine activée.

Une deuxième variante d'exécution du procédé de l'invention consiste à introduire l'agent complexant au cours de l'opération d'agglomération de la poudre d'alumine activée.

Un troisième mode de réalisation de l'invention consiste éventuellement à broyer la poudre d'alumine activée, à l'agglomérer puis à traiter les agglomérés obtenus par l'agent complexant, avant d'effectuer le mûrissement.

Les agglomérés d'alumine activée mis en oeuvre selon la présente invention sont préparés à partir d'une poudre d'alumine activée présentant une structure mal cristallisée et/ou amorphe.

Au sens de ce procédé, on entend par alumine de structure mal cristallisée, une alumine telle que l'analyse aux rayons X donne un diagramme ne présentant qu'une ou quelques raies diffuses correspondant aux phases cristallines des alumines de transition basse température et comportant essentiellement les phases chi, rho, êta, gamma, pseudogamma et leurs mélanges.

On entend par alumine de structure amorphe, une alumine telle que son analyse aux rayons X ne décèle aucune raie caractéristique d'une phase cristalline quelconque.

L'alumine activée mise en oeuvre dans l'invention est généralement obtenue par déshydratation rapide des hydroxydes d'aluminium tels que la bayerite, l'hydrargillite ou gibbsite, la nordstrandite ou des oxyhydroxydes d'aluminium tels que la boehmite et le diaspore.

Cette déshydratation est obtenue à l'aide d'un courant de gaz chauds permettant d'éliminer et entraîner très rapidement l'eau évaporée. La température des gaz dans l'appareillage varie généralement de 400°C à 1200°C environ avec un temps de contact de l'hydroxyde avec les gaz chauds de l'ordre d'une fraction de seconde à 4 ou 5 secondes.

L'alumine ainsi obtenue peut être utilisée telle quelle ou peut subir suivant l'application envisagée un traitement pour éliminer notamment les alcalins présents : une teneur en $Na_2O$ inférieure à 0,5 % peut être préférée.

La surface spécifique mesurée par la méthode BET de l'alumine activée obtenue par déshydratation rapide d'hydroxydes ou d'oxyhydroxydes d'aluminium varie généralement entre environ 50 et 400 $m^2/g$, le diamètre des particules est généralement compris entre 0,1 et 300 microns, de préférence entre 1 et 120 microns.

Cette alumine présente un volume poreux de l'ordre de 0,10 à 0, 50 $cm^3/g$, les pores ayant des dimensions inférieures à 50 nm.

Selon un mode de réalisation particulier de l'invention, l'alumine activée provient de la déshydratation rapide de l'hydrate de Bayer (hydrargillite) qui est un hydroxyde d'aluminium industriel facilement accessible et très bon marché. Une telle alumine activée est bien connue de l'homme du métier et est notamment décrite dans FR-A 1108011.

Conformément au procédé de l'invention, on met en contact l'alumine activée avec un agent complexant du cation $Al^{3+}$, avant l'opération de mûrissement, soit lorsqu'elle se trouve à l'état de poudre, soit lorsqu'elle est déjà sous forme d'agglomérés.

Comme agent complexant du cation $Al^{3+}$, on peut faire appel à au moins un des composés choisis dans le groupe formé par :

- les acides comprenant au moins un groupement carboxylate et au moins deux groupements hydroxyle et/ou amine ou comprenant au moins deux groupements carboxylate et au moins un groupe hydroxyle et/ou amine et leurs sels.
- les acides phosphoriques organiques de formules (I à III) suivantes :

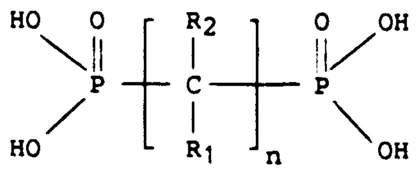

(I)

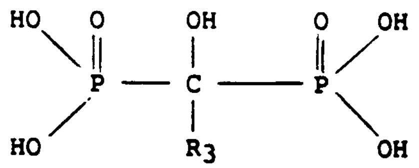

(II)

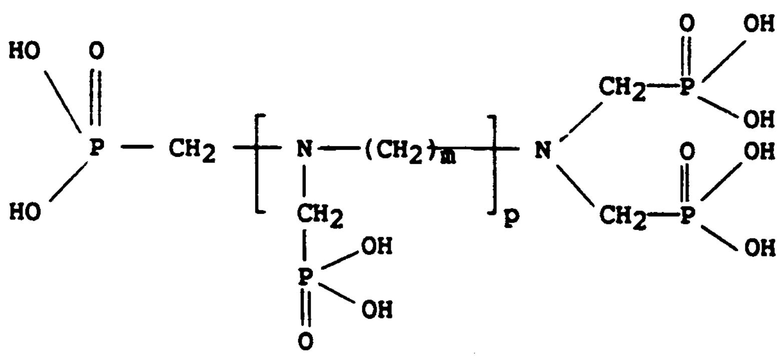

(III)

dans les formules (I) à (III), n et m sont des nombres entiers compris entre 1 et 6 ; p est un nombre entier compris entre 0 et 5 ; $R_1$, $R_2$, $R_3$ identiques ou différents représentent un atome d'hydrogène, un groupement alkyle, aryle, aralkyle ou un groupement hydroxyle ou amine.

- les hydroxyquinoléines ou dérivés répondant à la formule (IV) suivante :

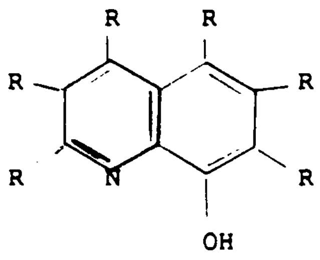

(IV)

dans la formule (IV), R représente un atome d'hydrogène, un radical hydrocarboné ayant de 1 à 20 atomes de carbone ou un atome d'halogène.

Parmi les acides carboxyliques utilisés comme agent complexant de cation $Al^{3+}$, on choisit plus particulièrement un acide carboxylique ayant de 2 à 15 atomes de carbone, de préférence de 2 à 10 atomes de carbone.

Comme acides convenant pour la mise en oeuvre de l'invention, on peut faire appel, par exemple, aux acides suivants :

- l'acide oxalique,
- les acides hydroxypolycarboxyliques, et plus particulièrement les acides hydroxydi- ou hydroxytricarboxyliques, comme par exemple l'acide malique, l'acide citrique ou l'acide tartronique,
- les acides (polyhydroxy)monocarboxyliques, comme par exemple l'acide glucoheptonique et l'acide gluconique,
- les acides poly(hydroxycarboxyliques), comme par exemple l'acide tartrique.

On peut également faire appel à un mélange de ces acides.

On choisit de préférence l'acide citrique ou oxalique.

Les sels de ces acides sont également convenables pour l'invention. Les sels préférés sont les sels de métaux alcalins, tels que les sels de sodium, ou les sels d'ammonium.

En ce qui concerne les agents complexants de formule (I) à (III), on fait appel à un acide phosphorique organique de préférence aliphatique, substitué ou non.

Celui-ci comprendra 1 à 15 atomes de carbone, de préférence de 1 à 10 atomes de carbone.

A titre d'exemples desdits composés, on peut citer :

- l'aminotriphosphonate de méthylène, l'éthylènediaminotétraphosphonate de méthylène, le triéthylènetétraaminohexaphosphonate de méthylène, le tétraéthylènepentaaminoheptaphosphonate de méthylène, le pentaéthylènehexaaminooctaphosphonate de méthylène,
- le diphosphonate de méthylène, de 1,1′ éthylène, de 1,2 éthylène, de 1,1′ propylène, de 1,3 propylène, de 1,6 hexaméthylène ; le 2,4 dihydoxypentaméthylène - 2,4 diphosphonate ; le 2,5 dihydroxyhexaméthylène - 2,5 diphosphonate ; le 2,3 dihydroxybutylène - 2,3 diphosphonate ; le 1 hydroxybenzyle - 1,1′ diphosphonate ; le 1 aminoéthylène 1-1′ diphosphonate ; l'hydroxyméthylène diphosphonate ; l'hydroxyéthylène 1,1′ diphosphonate ; le 1 hydroxypropylène 1-1′ diphosphonate ; le 1 hydroxybutylène 1-1′ diphosphonate ; le 1 hydroxyhexaméthylène - 1,1′ diphosphonate.

Pour ce qui est des agents complexants répondant à la formule (IV), on choisit de préférence un composé répondant à la formule (IV) dans laquelle R est un atome d'hydrogène ou un groupement aliphatique linéaire ou ramifié, saturé ou insaturé ayant de préférence de 5 à 20 atomes de carbone.

D'une manière préférentielle, on fait appel à l'oxine (hydroxy-8 quinoléine) ou à une hydroxy-8 quinoléine de formule (IV) dans laquelle R est toujours un atome hydrogène, à l'exception de la position 7 sur le cycle où il représente un groupement alkyle de formule $C_mH_{2m+1}$ avec m compris entre 5 et 20.

L'agent complexant tel que défini peut être mis en oeuvre sous forme solide ou, plus préférentiellement, sous forme de solution aqueuse dont la concentration varie, de préférence, entre 0,01 et 1 mole/litre.

La quantité d'agent complexant introduite par rapport à la quantité d'alumine est déterminée de telle sorte qu'elle représente, de préférence, entre 0,01 et 5 % du poids d'alumine et, encore plus préférentiellement, entre 0,05 et 0,5 %.

Avant d'effectuer l'agglomération de l'alumine activée, il peut être avantageux de broyer la poudre d'alumine activée afin qu'elle soit constituée de particules ayant un diamètre moyen compris entre environ 1 et 20 microns.

On réalise le plus souvent un broyage qui peut être effectué en humide ou à sec.

Il est possible de mettre en oeuvre le broyage à jet d'air, mais le plus souvent, on conduit le broyage d'une manière classique dans un broyeur à boulets, à sec ou avec addition d'eau.

Un premier mode de mise en oeuvre de l'invention consiste à introduire l'agent complexant au cours du broyage, en particulier par pulvérisation d'une solution aqueuse comprenant l'agent complexant sur la poudre d'alumine activée.

Cette opération de broyage est facultative et il y a lieu en son absence d'ajouter l'agent complexant dans une étape suivante.

Une autre variante d'exécution de l'invention consiste à ajouter l'agent complexant, au cours de l'opération d'agglomération.

L'agglomération de l'alumine activée est réalisée selon les méthodes connues de l'homme du métier telles que, par exemple, par pastillage, extrusion, mise en forme sous forme de billes au drageoir tournant, etc...

Cette agglomération peut être réalisée sur l'alumine activée telle qu'elle est obtenue par déshydratation et éventuellement traitement subséquent, ou sur une alumine activée broyée à une ou plusieurs granulométries déterminées.

Cette agglomération peut avoir été effectuée, ainsi qu'il est bien connu de l'homme de métier, en ajoutant des agents porogènes au mélange à agglomérer. Les agents porogènes que l'on peut utiliser sont notamment la farine de bois, le charbon de bois, la cellulose, les amidons, la naphtaline et, d'une manière générale, tous les composés organiques susceptibles d'être éliminés par calcination.

Un mode de réalisation préférentiel de l'invention est de pulvériser sur la poudre d'alumine activée mise en mouvement par exemple par la rotation d'un drageoir, une solution aqueuse comprenant l'agent complexant.

Selon une autre variante du procédé de l'invention, l'agent complexant peut être ajouté sur les agglomérés d'alumine activée, avant l'opération de mûrissement.

L'addition de l'agent complexant peut se faire notamment par pulvérisation d'une solution aqueuse comprenant l'agent complexant sur lesdits agglomérés.

Que l'agent complexant soit ajouté au moment du mûrissement ou dans une étape précédente, les agglomérés d'alumine activée sont soumis à l'opération de mûrissement ou dite également de maturation, au cours de laquelle l'alumine se réhydrate et la phase cristalline appelée boehmite se développe.

L'opération de mûrissement s'effectue à une température comprise entre 80°C et 120°C, de préférence aux environs de 100°C.

La durée de mûrissement est variable et est comprise, de préférence entre 1 heure et 24 heures, plus particulièrement entre 2 et 6 heures.

Un mode de mise en oeuvre pratique du mûrissement consiste à injecter de la vapeur d'eau vive, sur les agglomérés d'alumine.

Conformément au procédé de l'invention, les agglomérés d'alumine activée obtenus après mûrissement sont soumis à un traitement thermique afin de stabiliser la surface spécifique de l'alumine et promouvoir les propriétés adsorbantes de ces agglomérés.

Le traitement thermique est effectué à une température comprise entre environ 100°C et environ 500°C, pendant une durée suffisante pour enlever l'eau libre et l'eau structurale.

Au cours de cette étape, l'agent porogène peut être décomposé.

Il est possible de conduire ce traitement thermique en une seule opération, par exemple, dans un four rotatif industriel où la température s'échelonne dans la zone de température indiquée, selon la position des agglomérés par rapport à la source thermique, de préférence, un brûleur à gaz..

Dans ce cas, la durée du traitement thermique varie, de préférence, entre 2 heures et 12 heures.

On peut également effectuer le traitement thermique en deux étapes classiques, séchage puis calcination.

Les agglomérés d'alumine activée peuvent donc être séchés à une température généralement comprise entre environ 100°C et 250°C, pendant une durée le plus souvent compris entre 2 heures et 24 heures.

Ils sont ensuite soumis à une opération de calcination à une température comprise entre environ 250°C et environ 500°C pendant une période de temps comprise par exemple entre 1 heure et 8 heures.

Après traitement thermique, les agglomérés d'alumine activée obtenus sont constitués essentiellement d'alumine. Leur perte au feu est de l'ordre de 2 à 6 %.

Comme mentionné précédemment, les agglomérés d'alumine sont de préférence sous forme de billes, ayant un diamètre moyen compris entre 1 et 10 mm.

On entend par diamètre moyen, un diamètre tel que 50 % en poids des billes ont un diamètre supérieur ou inférieur au diamètre moyen.

On détermine le diamètre moyen par la méthode de tamisage avec différents tamis à ouverture de mailles définie.

Les propriétés texturales des agglomérés d'alumine activée de l'invention sont précisées ci-après.

Leur surface spécifique BET varie généralement entre 250 $m^2/g$ et 400 $m^2/g$, de préférence entre 290 $m^2/g$ et 350 $m^2/g$.

La surface spécifique exprimée est une surface BET, c'est-à-dire déterminée par adsorption d'azote, conformément à la norme ASTM : D 3663-78 établie à partir de la méthode BRUNAUER - EMMET - TELLER. [The Journal of American Society 60, 309 (1938).

Leur volume poreux total VPT est compris le plus souvent entre 0,40 $cm^3/g$ et 0,60 $cm^3/g$.

On détermine le volume poreux total à partir de la mesure de densités.

Le volume poreux total VPT est donné par la formule suivante :

$$VPT = \frac{1}{Dg} - \frac{1}{Da}$$

avec Dg = densité du grain
Da = densité absolue

On mesure les densités de grain Dg et absolue Da par la méthode de picnométrie respectivement au mercure et à l'hélium puis on calcule VPT selon la formule précitée.

Les agglomérés d'alumine activée selon l'invention ont une densité de remplissage tassé DRT comprise entre environ 500 $g/cm^3$ et environ 1000 $g/cm^3$.

Pour déterminer la DRT, on introduit un poids donné d' agglomérés dans une éprouvette graduée pour contenir les agglomérés dans un volume donné. On fait ensuite vibrer l'éprouvette jusou'à la fin de tout tassement et jusqu'à l'obtention d'un volume constant. On calcule ensuite le poids d'agglomérés oui occupe un volume unité.

En ce qui concerne les propriétés mécaniques des agglomérés, ils possèdent une très bonne résistance à l'écrasement telle que précédemment définie.

La mesure de la résistance à l'écrasement grain à grain EGG est faite sur un appareil à écrasement "LHOMARGY DY.20 B" ayant une vitesse de rapprochement des mâchoires de 0,5 mm/mn.

10 billes sont prélevées au hasard dans la fraction granulométrique 3.15-4 mm. Elles sont placées successivement entre le marteau et l'enclume de l'appareil à l'aide de pinces Brucelles.

Le résultat final (exprimé en daN) est donné par la moyenne de l'écrasement des 10 billes.

Les agglomérés d'alumine activée de l'invention présentent également une bonne résistance à l'attrition, supérieure à environ 98 %.

La résistance à l'attrition est mesurée par le pourcentage de produit non usé par frottement selon une méthode décrite ci-après qui consiste à soumettre un poids déterminé d'agglomérés à une intense agitation et à mesurer la quantité d'agglomérés restants non réduits en poussière.

Avant de conduire le test, on conditionne les agglomérés en les soumettant à un traitement thermique de deux heures dans un four dont la température est régulée à 300°C.
Après refroidissement en dessiccateur, on tamise le produit à sa dimension inférieure nominale, à l'aide de tamis AFNOR. Par exemple, si les billes ont un diamètre allant de 1,6 à 2,5 mm, on tamise à 1,6 mm.
On pèse exactement environ 10 g de produit tamisé.
On le place dans le pot broyeur de 65 $cm^3$ en acier inox d'un appareil à secousses commercialisé par la Société PROLABO sous la dénomination de microbroyeur DANGOUMAU. On fait fonctionner le microbroyeur pendant exactement 5 minutes.
Lorsque l'agitation est terminée, on tamise le produit recueilli avec un tamis correspondant aux 3/4 de la dimension inférieure du produit de départ.
On place le produit tamisé au four, 2 heures à 300°C.
Après refroidissement en dessiccateur, on pèse les agglomérés refusés par le tamis.
La résistance à l'attrition AIF est donnée par la formule suivante :

- soit "$p_1$", le poids de l'échantillon
- soit "$p_2$", le poids des agglomérés restant sur le tamis après le test

$$AIF = \frac{p_2}{p_1} X 100 (\%)$$

Bien que présentant de très bonnes propriétés mécaniques, les agglomérés d'alumine activée selon l'invention présentent une bonne capacité d'adsorption EO.6 puisqu'elle peut atteindre 25 %.

Le test permettant de déterminer la capacité d'adsorption consiste à mesurer la quantité d'eau fixée par l'alumine activée dans une atmosphère où la pression de vapeur d'eau est égale à 60 % de la vapeur saturante.
Cette pression est obtenue au dessus d'une solution aqueuse saturée de bromure de sodium, maintenue à 15°C.
Pour éliminer l'eau que l'échantillon a pu reprendre pendant son séjour à l'atmosphère, l'échantillon est régénéré 2 h à 300°C avant l'analyse.
On pèse environ exactement 2 g d'agglomérés d'alumine dans un pèse-filtre.
Le pèse-filtre est placé ouvert dans le dessiccateur à vide contenant le bromure de sodium. Après avoir réduit la pression dans le dessiccateur jusqu'à obtention d'une pression de 15 mm de mercure, on le met pendant 24 h dans une enceinte thermostatée à 15°C.
On mesure l'augmentation de poids après ce traitement.
La capacité d'adsorption EO.6 est défini comme suit :

- soit "p" le poids de l'échantillon
- soit "pl" l'augmentation de poids

$$EO.6 = \frac{pl X 100}{p} (\%)$$

Sans limiter la présente invention à la théorie, on peut penser que les propriétés intéressantes des agglomérés d'alumine activée de l'invention peuvent être corrélées avec la structure des agglomérés obtenus avant mûrissement et que la présence de la boehmite à la périphérie des agglomérés leur confère une excellente résistance à l'écrasement.

Comme mentionné précédemment, un mode de réalisation préférentiel de l'invention consiste à préparer les agglomérés d'alumine activée de l'invention selon le procédé décrit ci-dessus et en choisissant l'acide citrique, comme agent complexant.

Il est tout-à-fait intéressant de souligner que les agglomérés d'alumine intermédiaires, c'est-à-dire les agglomérés obtenus suite au mûrissement ainsi que les agglomérés d'alumine finals obtenus après calcination, présentent tous deux une morphologie de surface tout-à-fait originale.

Les agglomérés ou billes d'alumine intermédiaires comprennent un coeur composé essentiellement d'alumine mal cristallisé (alumine chi) et amorphe, de la boehmite et de la bayerite. Dans lesdits agglomérés, le taux de boehmite est, de préférence, supérieur à 5 % et, plus préférentiellement, compris entre 8 et 20 %.

Les billes d'alumine mûries laissent apparaître en surface des excroissances constituées par des bâtonnets cylindriques dont les dimensions sont très variables. Cette surface externe desdites billes est caractéristique.

La figure 1 représente une photographie prise au microscope électronique à balayage (G = 10.000) qui montre la morphologie de surface des billes d'alumine mûries obtenues selon l'invention, en mettant en oeuvre l'acide citrique, comme agent complexant, au moment du broyage.

La figure 2 représente à titre de comparaison, la morphologie des billes d'alumine mûries obtenues selon le même procédé mais sans intervention d'un agent complexant.

On ne remarque la présence de bâtonnets ayant une longueur comprise entre environ 0,5 et 2 µm que sur la figure 1.

Les agglomérés d'alumine finals qui sont donc obtenus après traitement thermique, présentent une morphologie de surface semblable à celle des agglomérés d'alumine intermédiaires.

La comparaison des figures 1 et 2 révèle de manière significative, l'influence de la présence de l'agent complexant sur la morphologie des billes d'alumine obtenues.

En raison de leurs propriétés, les agglomérés d'alumine activée de l'invention sont parfaitement bien adaptés pour être utilisés comme adsorbants, notamment pour la purification de gaz par adsorption de $CO_2$, CO, $N_2$, $NH_3$, d'hydrocarbures, etc...

Ils peuvent également être employés comme support en chromatographie et aussi dans le domaine de la catalyse.

On donne ci-après des exemples de réalisation de l'invention qui illustrent l'invention sans toutefois la limiter.

EXEMPLE 1

On part d'une alumine activée obtenue par déshydratation d'hydrargillite ayant les caractéristiques suivantes :

- alumine ayant une PAF de 5 % constituée d'alumine chi et d'amorphe (= 40 %)
- teneur en $Na_2O$ = 0,3 %
- surface spécifique BET = 300 $m^2/g$
- volume poreux total VPT = 0,30 $cm^3/g$
- densité totale tassée DRT = 0,30 $cm^3/g$

On broie 75,4 kg de ladite alumine activée dans un broyeur à boulets afin d'obtenir une poudre dont le diamètre moyen de particules est de 10 µm.

Au cours de l'opération de broyage qui dure 45 minutes, on pulvérise une solution aqueuse d'acide citrique préparée par dissolution de 68 g d'acide citrique dans 4,75 litres d'eau, ce qui correspond à un rapport acide citrique/$Al_2O_3$ de 0,1 %.

On met ensuite en forme la poudre broyée dans un granulateur ou drageoir. Les conditions de température lors de la granulation sont d'environ 50°C. Pour permettre cette mise en forme, on ajoute de l'eau.

Les agglomérés ou billes d'alumine obtenues ont un diamètre moyen de 3,35 mm, avec une perte au feu d'environ 35 %.

A la sortie du granulateur, les billes sont stockées dans une cuve puis soumises à une étape de mûrissement par passage de vapeur d'eau à 100°C pendant 4 heures.

Le dosage par diffraction X des billes mûries met en évidence 9 % de bayerite et 12 % de boehmite.

La figure 1 révèle l'état de surface des billes mûries obtenues.

En sortie de mûrissement, les billes sont séchées 2 heures 30 minutes à 220°C et calcinées 2 heures 30 minutes à 450°C.

Les billes obtenues présentent les caractéristiques suivantes :

- surface spécifique BET = 310 $m^2/g$
- volume poreux total VPT = 0,41 $cm^3/g$
- densité totale tassée DRT = 0,830 $g/cm^3$
- résistance à l'écrasement EGG. = 20 daN
- capacité d'adsorption EO.6 = 21,5 %
- résistance à l'attrition AIF = 99 %

EXEMPLE comparatif 2

On reproduit l'exemple 1 à la différence près que l'on pulvérise au cours du broyage une solution aqueuse d'acide oxalique préparée par dissolution de 175 g d'acide oxalique dans 4,75 litres d'eau, ce qui correspond à un rapport acide oxalique/$Al_2O_3$ de 0,25 %.

Après granulation de la poudre, on obtient des billes qui sont soumises à l'opération de mûrissement.

Le dosage par diffraction X des billes mûries met en évidence 4 % de bayerite et 15 % de boehmite.

Les billes obtenues après séchage et calcination ont les caractéristiques suivantes :

- surface spécifique BET = 325 $m^2/g$
- volume poreux total VPT = 0,45 $cm^3/g$
- densité totale tassée DRT = 0,780 $g/cm^3$
- résistance à l'écrasement EGG = 5 daN
- capacité d'adsorption EO.6 = 22 %

Essai comparatif A :

Dans cet essai, on ne met pas en oeuvre d'agent complexant.

On reproduit l'exemple 1 à la différence près que l'on broie 76 kg d'alumine activée et que l'on pulvérise 4,75 litres d'eau, au cours du broyage.

Après granulation de la poudre, on obtient des billes qui sont soumises à l'opération de mûrissement.

Le dosage par diffraction X des billes mûries met en évidence 26 % de bayerite et 2 % de boehmite.

La figure 2 illustre l'état de surface des billes mûries obtenues.

Les billes obtenues après séchage et calcination ont les caractéristiques suivantes :

- surface spécifique BET = 330 $m^2/g$
- volume poreux total VPT = 0,43 $cm^3/g$
- densité totale tassée DRT = 0,800 $g/cm^3$
- résistance à l'écrasement EGG = 11 daN
- capacité d'adsorption EO.6 = 23 %
- résistance à l'attrition AIF = 98,6 %

En conclusion, il ressort de la comparaison des exemples 1 et 2 et de l'essai A que la présence d'un agent complexant ajouté au cours du broyage, bloque l'apparition de la bayerite et favorise la boehmite dans des conditions habituelles de prédominance de la bayerite.

Il en résulte une augmentation de la résistance mécanique E.G.G. des billes d'alumine activée.

Il y a lieu de noter qu'une bonne capacité d'adsorption est conservée.

Afin de comparer les résistances à l'écrasement des billes d'alumine obtenues selon le procédé de l'invention (exemple 1) qui fait intervenir l'acide citrique comme agent complexant et des billes obtenues en l'absence d'agent complexant (essai comparatif A), on a déterminé la résistance à l'écrasement des billes en fonction du diamètre de celles-ci.

La figure 3 est un graphe sur lequel sont portées deux droites (A) et (B) qui représentent la variation de l'E.G.G. (en daN), en fonction du diamètre d de la bille au carré (en $mm^2$).

La variation de l'E.G.G. en fonction de $d^2$ répond respectivement :

- dans le cas des billes de l'exemple 1 de l'invention :

  . à l'équation $y = 1,3x$ (droite A),

- dans le cas des billes de l'essai comparatif A :

  . à l'équation $y = 0,7x$ (droite B).

La comparaison des pentes des droites révèle la nette amélioration de la résistance à l'écrasement des billes d'alumine de l'invention.

## Revendications

1. Agglomérés d'alumine activée caractérisés par le fait qu'ils présentent une résistance à l'écrasement supérieure à 15 daN mesurée sur des agglomérés d'alumine activée ayant un diamètre moyen compris entre 3 et 4 mm et une capacité d'adsorption supérieure à 18%.

2. Agglomérés d'alumine activée selon la revendication 1 caractérisés par le fait qu'ils présentent une résistance à l'écrasement comprise entre 15 et 20 daN.

3. Agglomérés d'alumine activée selon la revendication 1 caractérisés par le fait qu'ils présentent une résistance à

l'écrasement supérieure à 22 daN mesurée sur des agglomérés d'alumine activée ayant un diamètre compris entre 6 et 7 mm, de préférence supérieure à 25 daN et, plus particulièrement, comprise entre 30 et 50 daN.

4. Agglomérés d'alumine activée selon l'une des revendications 1 à 3 caractérisés par le fait que la résistance à l'écrasement desdits agglomérés en fonction de leur diamètre au carré satisfait à la relation $y = 1{,}3x$ .

5. Agglomérés d'alumine activée selon l'une des revendications 1 à 4 caractérisés par le fait qu'ils présentent une capacité d'adsorption comprise entre 20 et 24 %.

6. Agglomérés d'alumine activée selon l'une des revendications 1 à 5 caractérisés par le fait qu'ils présentent une morphologie de surface en "bûchettes".

7. Agglomérés d'alumine activée selon l'une des revendications 1 à 6 caractérisés par le fait qu'ils se présentent sous forme de billes d'alumine ayant un diamètre moyen compris entre 1 et 10 mm.

8. Agglomérés d'alumine activée selon l'une des revendications 1 à 7 caractérisés par le fait qu'ils présentent une surface spécifique BET comprise entre 250 et 400 $m^2/g$, de préférence comprise entre 290 et 350 $m^2/g$.

9. Agglomérés d'alumine activée selon l'une des revendications 1 à 6 caractérisés par le fait qu'ils présentent un volume poreux total compris entre 0,40 et 0,60 $cm^3/g$.

10. Agglomérés d'alumine activée selon l'une des revendications 1 à 9 caractérisés par le fait qu'ils ont une densité de remplissage tassé comprise entre 500 et 1000 $g/cm^3$.

11. Procédé de préparation des agglomérés d'alumine activée décrits dans l'une des revendications 1 à 10 caractérisé par le fait qu'il consiste à effectuer le mûrissement d'agglomérés d'alumine activée, sous pression atmosphérique, en présence d'un agent complexant du cation $Al^{3+}$, puis à soumettre lesdits agglomérés à un traitement thermique à une température comprise entre environ 100°C et environ 500°C.

12. Procédé selon la revendication 11 caractérisé par le fait que l'alumine activée qui est agglomérée provient de la déshydratation rapide de l'hydrargillite.

13. Procédé selon l'une des revendications 11 et 12 caractérisé par le fait que l'agent complexant du cation $Al^{3+}$ est choisi dans le groupe formé par :

- les acides comprenant au moins un groupement carboxylate et au moins deux groupements hydroxyle et/ou amine ou comprenant au moins deux groupements carboxylate et au moins un groupe hydroxyle et/ou amine et leurs sels.
- les acides phosphoriques organiques de formules (I à III) suivantes :

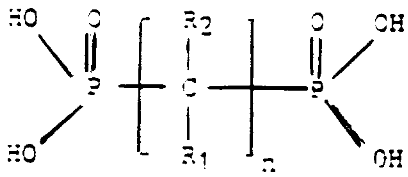

(I)

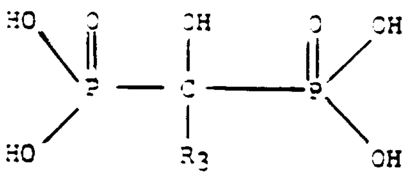

(II)

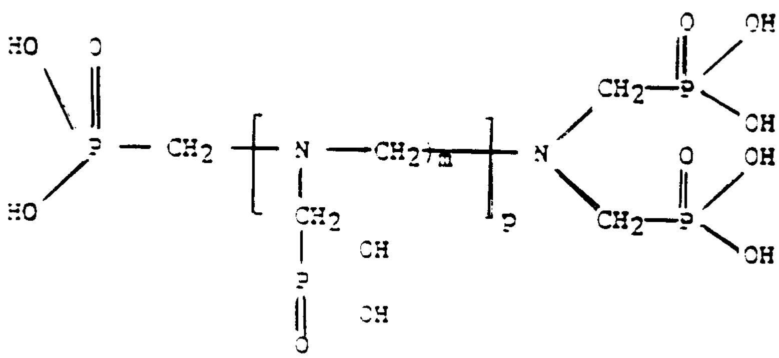

(III)

dans les formules (I) à (III), n et m sont des nombres entiers compris entre 1 et 6 ; p est un nombre entier compris entre 0 et 5 ; $R_1$, $R_2$, $R_3$ identiques ou différents représentent un atome d'hydrogène, un groupement alkyle, aryle, aralkyle ou un groupement hydroxyle ou amine.

- les hydroxyquinoléines ou dérivés répondant à la formule (IV) suivante :

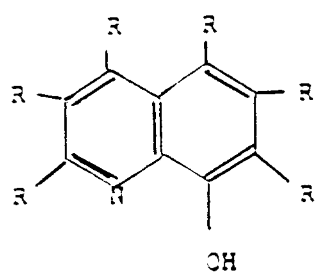

(IV)

dans la formule (IV), R représente un atome d'hydrogène, un radical hydrocarboné ayant de 1 à 20 atomes de carbone ou un atome d'halogène.

**14.** Procédé selon la revendication 13 caractérisé par le fait que l'agent complexant du cation $Al^{3+}$ est un acide carboxylique ayant de 2 à 15 atomes de carbone, de préférence de 2 à 10 atomes de carbone.

**15.** Procédé selon la revendication 13 caractérisé par le fait que l'agent complexant est choisi parmi des acides carboxyliques suivants :

- l'acide oxalique
- les acides hydroxypolycarboxyliques, et plus particulièrement
- les acides hydroxydi- ou hydroxytricarboxyliques, de préférence l'acide malique, l'acide citrique ou l'acide tartronique,

- les acides (polyhydroxy)monocarboxyliques, de préférence l'acide glucoheptonique et l'acide gluconique,
- les acides poly(hydroxycarboxyliques), de préférence l'acide tartrique.

**16.** Procédé selon la revendication 13 caractérisé par le fait que l'agent complexant est un acide phosphorique organique répondant à l'une des formules (I) à (III) aliphatique, substitué ou non ayant de 1 à 15 atomes de carbone, de préférence de 1 à 10 atomes de carbone.

**17.** Procédé selon la revendication 13 caractérisé par le fait que l'agent complexant est choisi parmi les composés suivants :

- l'aminotriphosphonate de méthylène, l'éthylènediaminotétraphosphonate de méthylène, le triéthylènetétraaminohexaphosphonate de méthylène, le tétraéthylènepentaaminoheptaphosphonate de méthylène, le pentaéthylènehexaaminooctaphosphonate de méthylène,
- le diphosphonate de méthylène, de 1,1' éthylène, de 1,2 éthylène, de 1,1' propylène, de 1,3 propylène, de 1,6 hexaméthylène; le 2,4 dihydroxypentaméthylène - 2,4 diphosphonate; le 2,5 dihydroxyhexaméthylène - 2,5 diphosphonate ; le 2,3 dihydroxybutylène - 2,3 diphosphonate ; le 1 hydroxybenzyle - 1,1 diphosphonate ; le 1 aminoéthylène 1-1' diphosphonate ; l'hydroxyméthylène diphosphonate ; l'hydroxyéthylène 1,1' diphosphonate ; le 1 hydroxypropylène 1-1' diphosphonate ; le 1 hydroxybutylène 1-1' diphosphonate ; le 1 hydroxyhexaméthylène - 1,1' diphosphonate.

**18.** Procédé selon la revendication 13 caractérisé par le fait que l'agent complexant est un composé répondant à la formule (IV) dans laquelle R est un atome d'hydrogène ou un groupement aliphatique linéaire ou ramifié, saturé ou insaturé ayant de préférence de 5 à 20 atomes de carbone.

**19.** Procédé selon l'une des revendications 13 caractérisé par le fait que l'agent complexant est l'oxine (hydroxy-8 quinoléine) ou une hydroxy-8 quinoléine de formule (IV) dans laquelle R est toujours un atome hydrogène, à l'exception de la position 7 sur le cycle où il représente un groupement alkyle de formule $C_mH_{2m+1}$ avec m compris entre 5 et 20.

**20.** Procédé selon la revendication 13 caractérisé par le fait que l'agent complexant est l'acide citrique.

**21.** Procédé selon l'une des revendications 13 à 20 caractérisé par le fait que l'agent complexant représente de 0,01 à 5 % du poids d'alumine, de préférence de 0,05 à 0,5%.

**22.** Procédé selon l'une des revendications 11 à 21 caractérisé par le fait que l'agent complexant est introduit au cours de l'opération de broyage de la poudre d'alumine activée.

**23.** Procédé selon l'une des revendications 11 à 21 caractérisé par le fait que l'agent complexant est introduit au cours de l'opération d'agglomération de la poudre d'alumine activée.

**24.** Procédé selon l'une des revendications 11 à 21 caractérisé par le fait que l'agent complexant est ajouté sur les agglomérés obtenus après agglomération de la poudre d'alumine activée, avant d'effectuer le mûrissement.

**25.** Procédé selon l'une des revendications 11 à 24 caractérisé par le fait que les agglomérés d'alumine activée sont soumis à une opération de mûrissement à une température comprise entre 80°C et 120°C, de préférence aux environs de 100°C.

**26.** Procédé selon l'une des revendications 11 à 25 caractérisé par le fait que les agglomérés d'alumine activée mûris sont séchés à une température comprise entre 100°C et 250°C.

**27.** Procédé selon l'une des revendications 11 à 26 caractérisé pu le fait que les agglomérés d'alumine activée mûris, éventuellement séchés sont soumis à une calcination à une température comprise entre 250°C et 500°C.

## Claims

**1.** Activated alumina agglomerates, characterized in that they have a crush resistance of more than 15 daN, measured on activated alumina agglomerates with an average diameter which is in the range 3 to 4 mm, and an adsorption capacity of more than 18%.

2. Activated alumina agglomerates according to claim 1, characterized in that they have a crush resistance which is in the range 15 to 20 daN.

3. Activated alumina agglomerates according to claim 1, characterized in that they have a crush resistance of more than 22 daN, measured on activated alumina agglomerates with a diameter which is in the range 6 to 7 mm, preferably more than 25 daN and, more particularly, in the range 30 to 50 daN.

4. Activated alumina agglomerates according to any one of claims 1 to 3, characterized in that the crush resistance of said agglomerates, as a function of the square of their diameter, satisfies the relationship $y = 1.3x$.

5. Activated alumina agglomerates according to any one of claims 1 to 4, characterized in that they have an adsorption capacity which is in the range 20% to 24%.

6. Activated alumina agglomerates according to any one of claims 1 to 5, characterized in that they have a "rod-like" space morphology.

7. Activated alumina agglomerates according to any one of claims 1 to 6, characterized in that they are in the form of alumina spherules with an average diameter which is in the range 1 to 10 mm.

8. Activated alumina agglomerates according to any one of claims 1 to 7, characterized in that they have a BET specific surface area which is in the range 250 to 400 $m^2/g$, preferably in the range 290 to 350 $m^2/g$.

9. Activated alumina agglomerates according to any one of claims 1 to 6, characterized in that they have a total pore volume which is in the range 0.40 to 0.60 $cm^3/g$.

10. Activated alumina agglomerates according to any one of claims 1 to 9, characterized in that they have a packed filling density which is in the range 500 to 1000 $g/cm^3$.

11. A process for the preparation of activated alumina agglomerates as described in any one of claims 1 to 10, characterized in that it consists of ageing activated alumina agglomerates at atmospheric pressure in the presence of an $Al^{3+}$ cation complexing agent then heat treating said agglomerates at a temperature which is in the range about 100°C to about 500°C.

12. A process according to claim 11, characterized in that the activated alumina which is agglomerated results from the rapid dehydration of hydrargillite.

13. A process according to claim 11 or claim 12, characterized in that the $Al^{3+}$ cation complexing agent is selected from the group formed by:

- acids containing at least one carboxylate group and at least two hydroxy and/or amine groups or containing at least two carboxylate groups and at least one hydroxy and/or amine group and salts thereof;
- organic phosphoric acids with the following formulae (I to III):

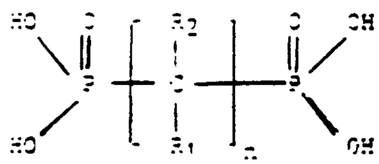

(I)

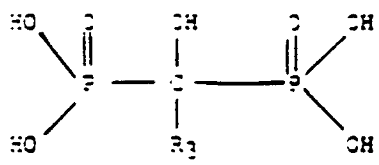

(II)

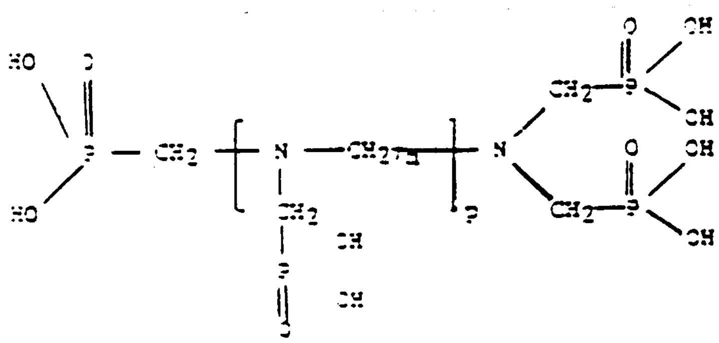

(III)

in which formulae (I) to (III), n and m are whole numbers in the range 1 to 6; p is a whole number in the range 0 to 5; $R_1$, $R_2$ and $R_3$, which may be identical or different, represent a hydrogen atom, an alkyl, aryl or aralkyl group or a hydroxy or amine group;

- hydroxyquinolines or derivatives with the following formula (IV):

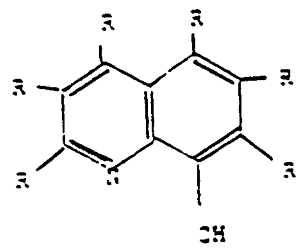

(IV)

in which formula (IV), R represents a hydrogen atom, a hydrocarbon radical containing 1 to 20 carbon atoms or a halogen atom.

**14.** A process according to claim 13, characterized in that the $Al^{3+}$ cation complexing agent is a carboxylic acid containing 2 to 15 carbon atoms, preferably 2 to 10 carbon atoms.

**15.** A process according to claim 13, characterized in that the complexing agent is selected from the following carboxylic acids:

- oxalic acid;
- hydroxypolycarboxylic acids, and more particularly
- hydroxydi- or hydroxytricarboxylic acids, preferably malic acid, citric acid or tartronic acid;
- (polyhydroxy)monocarboxylic acids, preferably glucoheptonic acid and gluconic acid;
- poly(hydroxycarboxylic) acids, preferably tartaric acid.

**16.** A process according to claim 13, characterized in that the complexing agent is an organic phosphoric acid with one of aliphatic formulae (I) to (III), which may or may not be substituted, containing 1 to 15 carbon atoms, preferably 1 to 10 carbon atoms.

**17.** A process according to claim 13, characterized in that the complexing agent is selected from the following compounds:

- methylene aminotriphosphonate, methylene ethylenediaminotetraphosphonate, methylene triethylenetetraaminohexaphosphonate, methylene tetraethylenepentaaminoheptaphosphonate, methylene pentaethylenehexaaminooctaphosphonate;
- methylene, 1,1'-ethylene, 1,2-ethylene, 1,1'propylene, 1,3-propylene, and 1,6-hexamethylene diphosphonate; 2,4-dihydroxypentamethylene-2,4-diphosphonate; 2,5-dihydroxyhexamethylene-2,5-diphosphonate; 2,3-dihydroxybutylene-2,3-diphosphonate; 1-hydroxybenzyl-1,1-diphosphonate; 1-aminoethylene-1,1'-diphosphonate; hydroxymethylene diphosphonate; hydroxyethylene-1,1'-diphosphonate; hydroxypropylene-1,1'-diphosphonate; 1-hydroxybutylene-1,1'-diphosphonate; and 1-hydroxyhexamethylene-1,1'-diphosphonate.

18. A process according to claim 13, characterized in that the complexing agent is a compound with formula (IV) in which R is a hydrogen atom or a linear or branched, saturated or unsaturated aliphatic group which preferably contains 5 to 20 carbon atoms.

19. A process according to claim 13, characterized in that the complexing agent is oxine (8-hydroxyquinoline) or an 8-hydroxyquinoline with formula (IV) in which R is always a hydrogen atom, with the exception of position 7 in the ring where it represents an all group with formula $C_mH_{2m+1}$ where m is in the range 5 to 20.

20. A process according to claim 13, characterized in that the complexing agent is citric acid.

21. A process according to any one of claims 13 to 20, characterized in that the complexing agent represents 0.01% to 5% by weight of alumina, preferably 0.05% to 0.5%.

22. A process according to any one of claims 11 to 21, characterized in that the complexing agent is introduced during the activated alumina powder grinding operation.

23. A process according to any one of claims 11 to 21, characterized in that the complexing agent is introduced during the activated alumina powder agglomeration operation.

24. A process according to any one of claims 11 to 21, characterized in that the complexing agent is added to the agglomerates obtained after agglomeration of the activated alumina powder, before ageing.

25. A process according to any one of claims 11 to 24, characterized in that the activated alumina agglomerates are aged at a temperature which is in the range 80°C to 120°C, preferably at about 100°C.

26. A process according to any one of claims 11 to 25, characterized in that the aged activated alumina agglomerates are dried at a temperature which is in the range 100°C to 250°C.

27. A process according to any one of claims 11 to 26, characterized in that the aged activated alumina agglomerates, which have optionally been dried, are calcined at a temperature which is in the range 250°C to 500°C.

**Patentansprüche**

1. Agglomerate von aktiviertem Aluminiumoxid, dadurch gekennzeichnet, daß sie eine Druckfestigkeit von hoher als 15 daN aufweisen, gemessen an Agglomeraten von aktiviertem Aluminiumoxid mit einem mittleren Durchmesser zwischen 3 mm und 4 mm und einer Adsorptionskapazität von höher als 18 %.

2. Agglomerate von aktiviertem Aluminiumoxid nach Anspruch 1, dadurch gekennzeichnet, daß sie eine Druckfestigkeit zwischen 15 daN und 20 daN aufweisen.

3. Agglomerate von aktiviertem Aluminiumoxid nach Anspruch 1, dadurch gekennzeichnet, daß sie eine Druckfestigkeit von höher als 22 daN aufweisen, gemessen an Agglomeraten von aktiviertem Aluminiumoxid min einem mittleren Durchmesser zwischen 6 mm und 7 mm, vorzugsweise von hoher als 25 daN und ganz besonders bevorzugt zwischen 30 daN und 50 daN.

4. Agglomerate von aktiviertem Aluminiumoxid nach einem der Ansprüche 1 bis 3, dadurch gekennzeichnet, daß die Druckfestigkeit der genannten Agglomerate in Abhängigkeit von ihrem quadratischen Durchmesser der Relation $y = 1{,}3x$ entspricht.

5. Agglomerate von aktiviertem Aluminiumoxid nach einem der Ansprüche 1 bis 4, dadurch gekennzeichnet, daß sie eine Adsorptionskapazität zwischen 20 % und 24 % aufweisen.

6. Agglomerate von aktiviertem Aluminiumoxid nach einem der Ansprüche 1 bis 5, dadurch gekennzeichnet, daß sie eine Morphologie der Oberfläche in Form von "Holzstuckchen" aufweisen.

7. Agglomerate von aktiviertem Aluminiumoxid nach einem der Ansprüche 1 bis 6, dadurch gekennzeichnet, daß sie in Form von Kugeln aus Aluminiumoxid mit einem mittleren Durchmesser zwischen 1 mm und 10 mm vorliegen.

8. Agglomerate von aktiviertem Aluminiumoxid nach einem der Ansprüche 1 bis 7, dadurch gekennzeichnet, daß sie

eine spezifische Oberfläche BET zwischen 250 $m^2/g$ und 400 $m^2/g$, vorzugsweise zwischen 290 $m^2/g$ und 350 $m^2/g$ aufweisen.

9. Agglomerate von aktiviertem Aluminiumoxid nach einem der Ansprüche 1 bis 6, dadurch gekennzeichnet, daß sie ein Gesamtporenvolumen zwischen 0,40 $cm^3/g$ und 0,60 $cm^3/g$ aufweisen.

10. Agglomerate von aktiviertem Aluminiumoxid nach einem der Ansprüche 1 bis 9, dadurch gekennzeichnet, daß sie eine zusammengedrückte Schüttdichte zwischen 500 $g/cm^3$ und 1000 $g/cm^3$ besitzen.

11. Verfahren zur Herstellung von Agglomeraten aus aktiviertem Aluminiumoxid wie in einem der Ansprüche 1 bis 10 beschrieben, dadurch gekennzeichnet, daß es darin besteht, die Reifung von Agglomeraten aus aktiviertem Aluminiumoxid unter atmosphärischem Druck in Anwesenheit eines mit dem Kation $Al^{3+}$ komplexbildenden Mittels durchzufuhren und anschließend die genannten Agglomerate einer thermischen Behandlung bei einer Temperatur zwischen etwa 100 °C und etwa 500 °C zu unterziehen.

12. Verfahren nach Anspruch 11, dadurch gekennzeichnet, daß das aktivierte Aluminiumoxid, das agglomeriert wird, aus der schnellen Dehydratisierung von Hydrargillit stammt.

13. Verfahren nach einem der Ansprüche 11 und 12, dadurch gekennzeichnet, daß das mit dem Kation $Al^{3+}$ komplexbildende Mittel aus der Gruppe gewählt wird, die gebildet wird durch:

- die Sauren, die mindestens eine Carboxylatgruppe und mindestens zwei Hydroxylgruppen und/oder Aminogruppen umfassen oder mindestens zwei Carboxylatgruppen und mindestens eine Hydroxylgruppe und/oder Aminogruppe umfassen, sowie ihre Salze,
- die organischen Phosphorsauren der folgenden Formeln (I) bis (III):

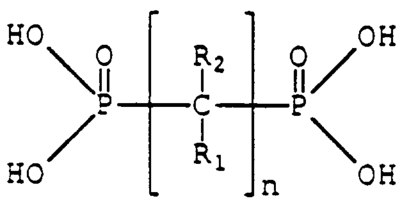

(I)

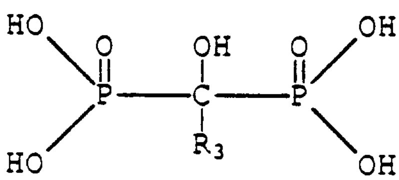

(II)

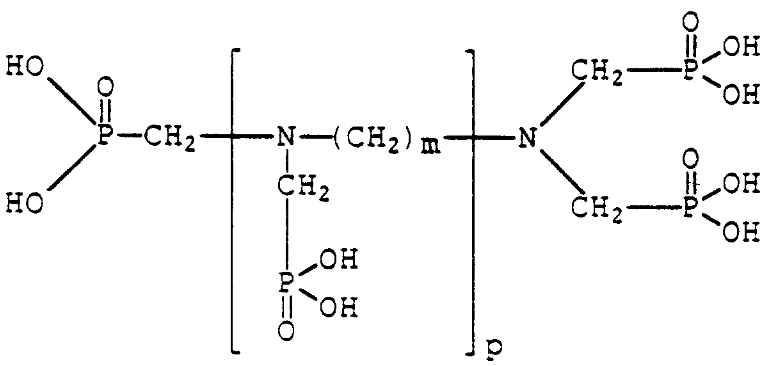

(III)

wobei in den Formeln (I) bis (III) n und m ganze Zahlen zwischen 1 und 6 sind; p eine ganze Zahl zwischen 0 und 5 ist; $R_1$, $R_2$ und $R_3$, gleich oder verschieden, ein Wasserstoffatom, eine Gruppe Alkyl, Aryl, Aralkyl oder eine Gruppe Hydroxyl oder Amino darstellen,
- die Hydroxychinoline oder Derivate der folgenden Formel (IV):

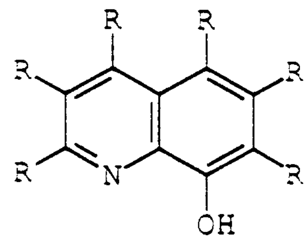

(IV)

wobei in der Formel (IV) R ein Wasserstoffatom, einen Kohlenwasserstoffrest mit 1 bis 20 Kohlenstoffatomen oder ein Halogenatom darstellt.

**14.** Verfahren nach Anspruch 13, dadurch gekennzeichnet, daß das mit dem Kation $Al^{3+}$ komplexbildende Mittel eine Carbonsäure mit 2 bis 15 Kohlenstoffatomen, vorzugsweise 2 bis 10 Kohlenstoffatomen ist.

**15.** Verfahren nach Anspruch 13, dadurch gekennzeichnet, daß das komplexbildende Mittel unter den folgenden Carbonsäuren ausgewählt wird:

- Oxalsäure,
- den Hydroxypolycarbonsäuren und ganz besonders
- den Hydroxydi- oder Hydroxytricarbonsäuren, vorzugsweise Äpfelsäure, Citronensäure oder Tartronsäure,
- den (Polyhydroxy)monocarbonsäuren, vorzugsweise Glucoheptonsäure und Gluconsäure,
- den Poly(hydroxycarbonsäuren), vorzugsweise Weinsäure.

**16.** Verfahren nach Anspruch 13, dadurch gekennzeichnet, daß das komplexbildende Mittel eine aliphatische, substituierte oder nicht substituierte organische Phosphorsäure mit 1 bis 15 Kohlenstoffatomen, vorzugsweise 1 bis 10 Kohlenstoffatomen ist, die einer der Formel (I) bis (III) entspricht.

**17.** Verfahren nach Anspruch 13, dadurch gekennzeichnet, daß das komplexbildende Mittel unter den folgenden Verbindungen ausgewählt wird:

- Methylen-aminotriphosphonat,Methylen-ethylendiaminotetraphosphonat,Methylen-triethylentetraaminohexaphosphonat, Methylen-tetraethylenpentaaminoheptaphosphonat, Methylenpentaethylenhexaaminooctaphosphonat,
- Diphosphonat von Methylen, 1,1'-Ethylen, 1,2-Ethylen, 1,1'-Propylen, 1,3-Propylen, 1,6-Hexamethylen; 2,4-Dihydroxypentamethylen-2,4-diphosphonat; 2,5-Dihydroxyhexamethylen-2,5-diphosphonat; 2,3-Dihydroxybutylen-2,3-diphosphonat; 1-Hydroxybenzyl-1,1-diphosphonat; 1-Aminoethylen-1,1'-diphosphonat; Hydroxymethylendiphosphonat; Hydroxyethylen-1,1'-diphosphonat; 1-Hydroxypropylen-1,1'diphosphonat; 1-Hydroxybutylen-1,1'-diphosphonat; 1-Hydroxyhexamethylen-1,1'-diphosphonat.

**18.** Verfahren nach Anspruch 13, dadurch gekennzeichnet, daß das komplexbildende Mittel eine Verbindung ist, die der Formel (IV) entspricht, worin R ein Wasserstoffatom oder eine lineare oder verzweigte, gesättigte oder ungesättigte aliphatische Gruppe mit vorzugsweise 5 bis 20 Kohlenstoffatomen darstellt.

**19.** Verfahren nach Anspruch 13, dadurch gekennzeichnet, daß das komplexbildende Mittel (8-Hydroxychinolin)-oxin oder ein 8-Hydroxychinolin der Formel (IV) ist, in der R immer ein Wasserstoffatom darstellt, mit Ausnahme der Position 7 in dem Ring, wo es eine Alkylgruppe der Formel $C_mH_{2m+1}$ bedeutet, mit m zwischen 5 und 20.

**20.** Verfahren nach Anspruch 13, dadurch gekennzeichnet, daß das komplexbildende Mittel Citronensäure ist.

**21.** Verfahren nach einem der Ansprüche 13 bis 20, dadurch gekennzeichnet, daß das komplexbildende Mittel 0,01 % bis 5 % des Gewichtes des Aluminiumoxids darstellt, vorzugsweise 0,05 % bis 5 %.

**22.** Verfahren nach einem der Ansprüche 11 bis 21, dadurch gekennzeichnet, daß das komplexbildende Mittel im Verlaufe des Arbeitsganges der Zerkleinerung des aktivierten Aluminiumoxid-Pulvers zugesetzt wird.

**23.** Verfahren nach einem der Ansprüche 11 bis 21, dadurch gekennzeichnet, daß das komplexbildende Mittel im Verlaufe des Arbeitsganges der Agglomeration des aktivierten Aluminiumoxid-Pulvers zugesetzt wird.

**24.** Verfahren nach einem der Ansprüche 11 bis 21, dadurch gekennzeichnet, daß das komplezbildende Mittel den nach der Agglomeration erhaltenen Agglomeraten des aktivierten Aluminiumoxid-Pulvers zugesetzt wird und vor der Durchfuhrung der Reifung.

**25.** Verfahren nach einem der Ansprüche 11 bis 24, dadurch gekennzeichnet, daß die Agglomerate von aktiviertem Aluminiumoxid einem Arbeitsgang der Reifung bei einer Temperatur zwischen 80 °C und 120 °C, vorzugsweise bei etwa 100 °C unterzogen werden.

**26.** Verfahren nach einem der Ansprüche 11 bis 25, dadurch gekennzeichnet, daß die gereiften Agglomerate von aktiviertem Aluminiumoxid bei einer Temperatur zwischen 100 °C und 250 °C getrocknet werden.

**27.** Verfahren nach einem der Ansprüche 11 bis 26, dadurch gekennzeichnet, daß gereiften, gegebenenfalls getrockneten Agglomerate von aktiviertem Aluminiumoxid einer Kalzinierung bei einer Temperatur zwischen 250 °C und 500 °C unterzogen werden.

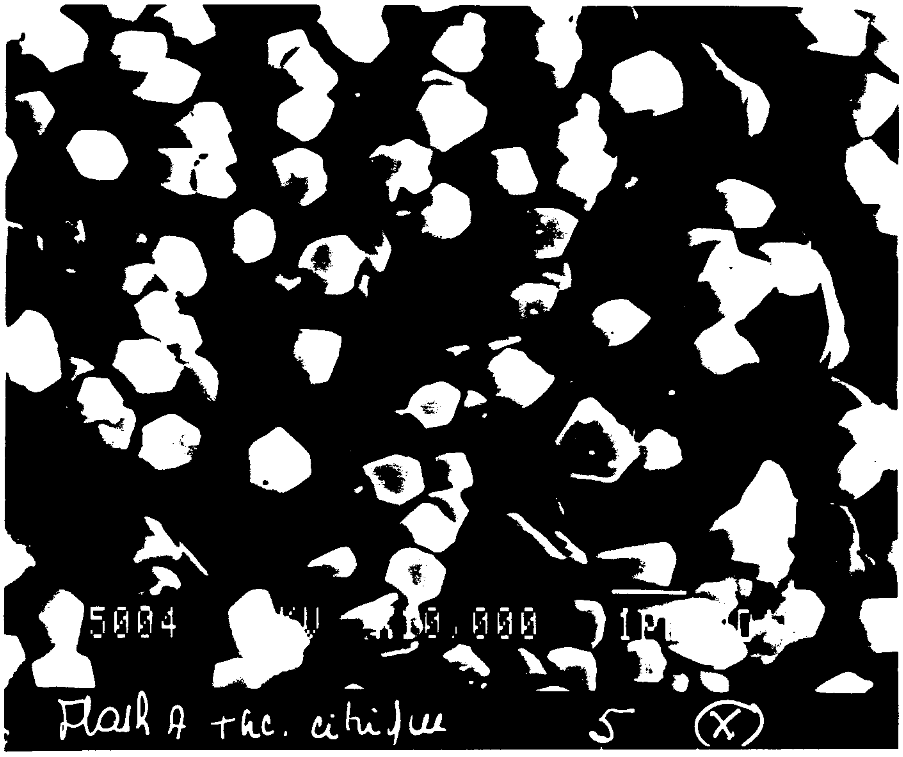


Figure 1

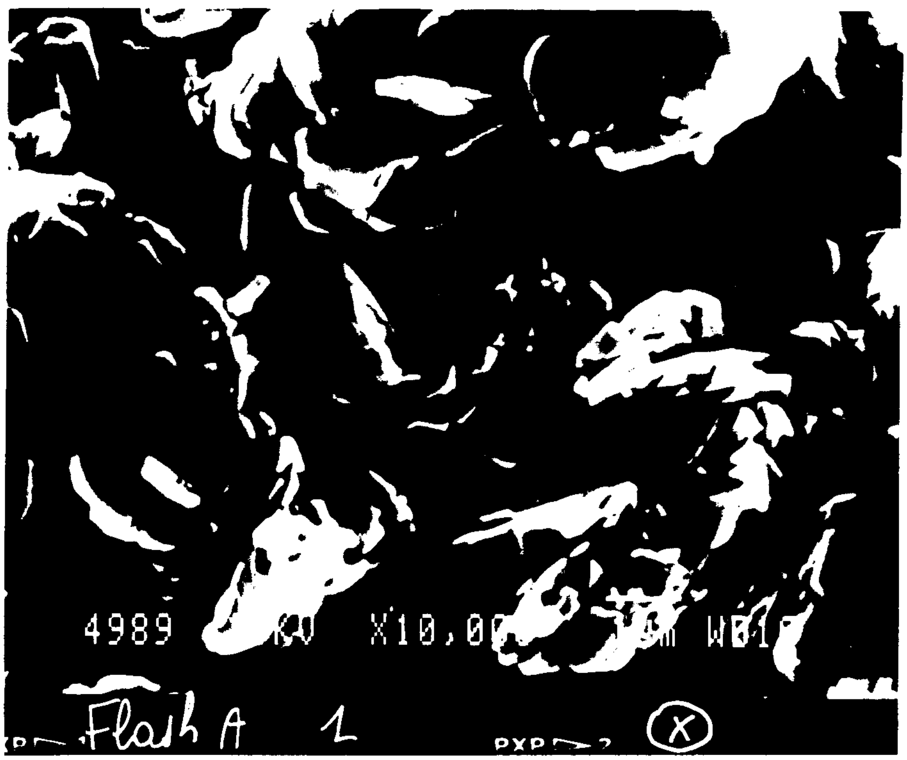


Figure 2

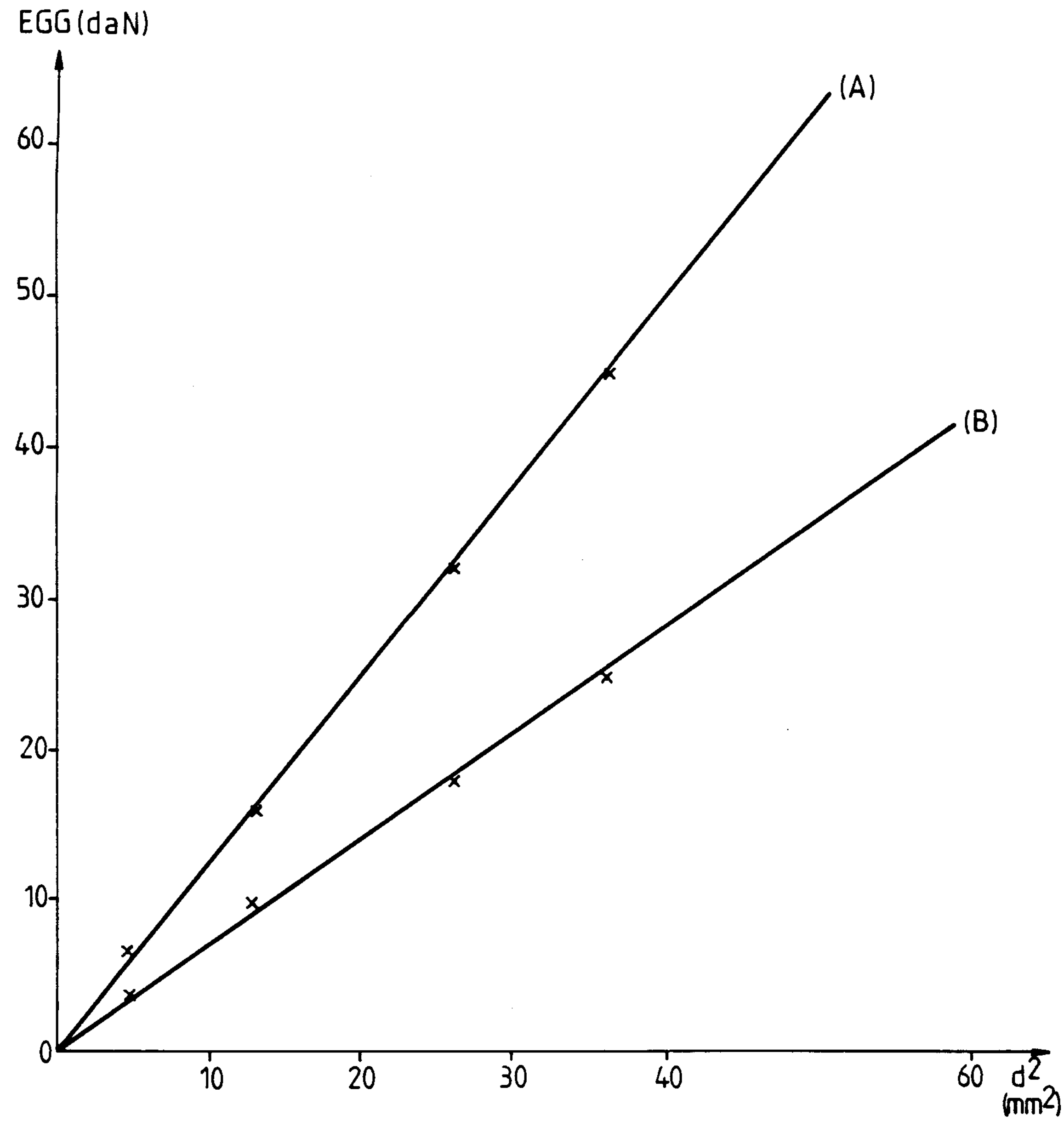


FIGURE 3